# EUROPEAN PATENT APPLICATION

(11) **EP 0 711 030 A1**
(43) Date of publication of application: **08.05.1996**
(21) Application number: 95850189.2
(22) Date of filing: 01.11.1995
(51) Int. Cl.: H02P 8/36

(54) **Method and device for controlling a motor**

(30) Priority: 04.11.1994 SE 19940003782
(71) Applicant: Tour & Andersson Control Aktiebolag, S-137 37 Västerhaninge (SE)
(72) Inventor: Högfeldt, Hakan, S-224 75 Lund (SE)
(74) Representative: Rostovanyi, Peter, et al

(57) **Abstract**

A method for controlling a motor comprises the steps of
feeding driving voltages to the windings of the motor (3), each driving voltage comprising a periodic basic voltage which is so modulated that each of its periods includes a plurality of voltage pulses,
measuring, during each voltage pulse, the amplitude of a current generated by the voltage pulse in the winding, and
controlling the width of each voltage pulse as a function of the amplitude of the current, such that a given maximum permissible current amplitude is not exceeded.

This method is distinguished by the steps of
detecting a change in the characteristics of the driving voltage,
determining the size of this change, and
taking a given step when this change exceeds a limit value.

A device for implementing the method is also disclosed. The method and the device may, for instance, be applied to a valve actuator.

## Description

The present invention relates to a method and a device for controlling a motor, and especially concerns such control as includes the detection of when the output shaft of the motor is exposed to an abnormally high braking torque.

Today's electric motors are used within an extensive range of applications. In many applications, use is made of a device for controlling the operation of the motor, the control partly consisting in the detection of when the output shaft of the motor is loaded to an extent that may not be regarded as normal for the application at issue. Following the detection of this abnormal state, a given step is taken.

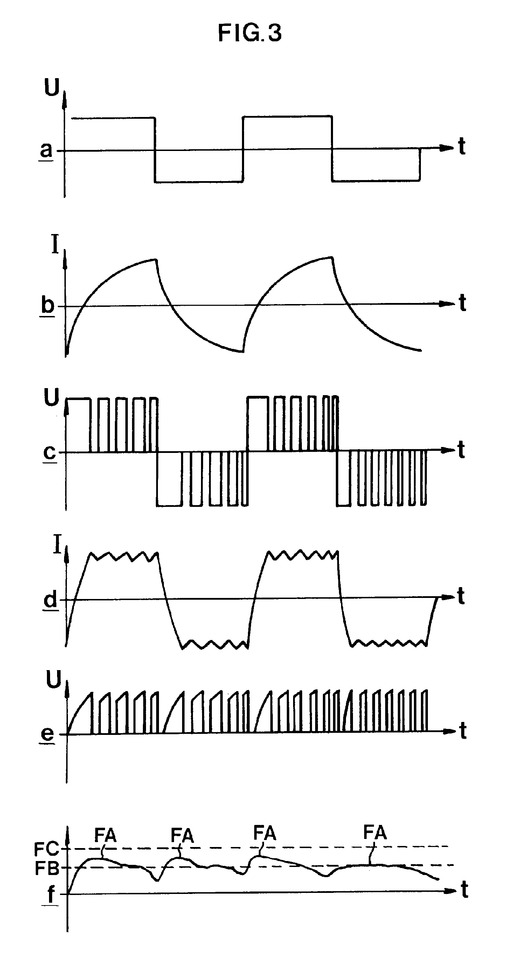

In conventional fashion, a synchronous motor or a step motor may be operated with square-wave voltages of variable frequency, the motor having to be started at a voltage of fairly low frequency. During a start-up period, the frequency is gradually raised, to finally reach the aimed-at operational frequency. The voltage applied to a winding in the motor is shown as waveform a in Fig. 3 of the accompanying drawings. The winding current generated by the applied voltage is shown as waveform b in Fig. 3. During every other half period, the square-wave driving voltage has a constant, positive amplitude, and during every other half period, the square-wave driving voltage has a constant, negative amplitude. This causes a current to be driven through the winding, this current exponentially approaching a maximum permissible value during each half period and reaching this value just at the end of the half period. Every other half period, this value is positive, and every other half period, this value is negative but has the same absolute value. However, this method of operating a motor, in particular a step motor, suffers from a number of drawbacks. Above all, the highest possible frequency of the driving voltage, i.e. the maximum number of revolutions of the motor, is fairly low, and the shaft torque emitted by the motor at a certain number of revolutions is fairly restricted at the upper part of the speed range.

In recent years, one has therefore begun to use a completely different method of operating a motor. This method of operation is referred to as operation with pulse-width-modulated voltage. During the half periods with driving voltage, the winding is supplied not with a constant voltage, but with a pulse train of voltage pulses. The amplitude of the pulses considerably exceeds that of the constant voltage, for which reason the winding current rises much more rapidly. The duration of the pulses, i.e. the pulse width, therefore has to be so controlled that the winding current never exceeds its maximum permissible value. On the other hand, the pulses can be frequently supplied, such that the winding current can, during the entire half period, be maintained at an essentially constant level, and more specifically within a very narrow range close to the maximum permissible current level. When the torque emitted by the motor is approximately proportional to the motor current, the motor will, on average, yield a much higher torque than it would have done if operated according to the first-mentioned mode of operation.

EP 0 462 050 teaches a method of detecting when the output shaft of the motor is loaded to an abnormal extent, for instance because a driven device is out of order or has reached an end position. In this method, a square-wave driving voltage is fed to the motor, resulting in the generation of a current in the motor as above. The instantaneous value of the motor current is periodically detected, and the resulting instantaneous values are then compared with each other. If the compared values differ from each other by more than a limit value, one draws the conclusion that an abnormal state is at hand. This method is based on the fact that the motor current changes considerably when the braking torque applied to the output shaft of the motor increases rapidly and to a considerable extent.

However, this method cannot be applied when the motor is operated with a pulse-width-modulated voltage, since the current then is maintained essentially constant, regardless of the braking torque on the motor shaft.

However, there does not today exist any satisfactory method for detecting when the output shaft of the motor is loaded to an abnormal extent, when the motor is operated with a pulse-width-modulated voltage.

One object of the present invention is to provide a motor control which generates a driving voltage that, when turned on, rapidly causes the motor current to reach a maximum permissible level and which essentially maintains the high current level as long as there is a driving voltage and which further achieves accurate, rapid and efficient detection of when the motor is loaded to an abnormal extent for the application at issue.

Another object of the invention is to adapt such a motor control for use in an actuator.

According to the invention, these objects are attained by a method and a device for controlling a motor, as well as by an actuator including the control mechanism, which have the characteristics recited in the appended claims.

A mode of implementation of the inventive method, as well as an embodiment of the inventive device, will now be described with reference to the accompanying drawings, in which
Fig. 1 is a highly schematic block diagram illustrating an embodiment of the device according to the invention,
Fig. 2 is a more detailed block diagram illustrating the embodiment of Fig. 1, and
Fig. 3 illustrates waveforms for currents and voltages in the embodiment of Fig. 1, as well as for a current and a voltage in a prior-art device.

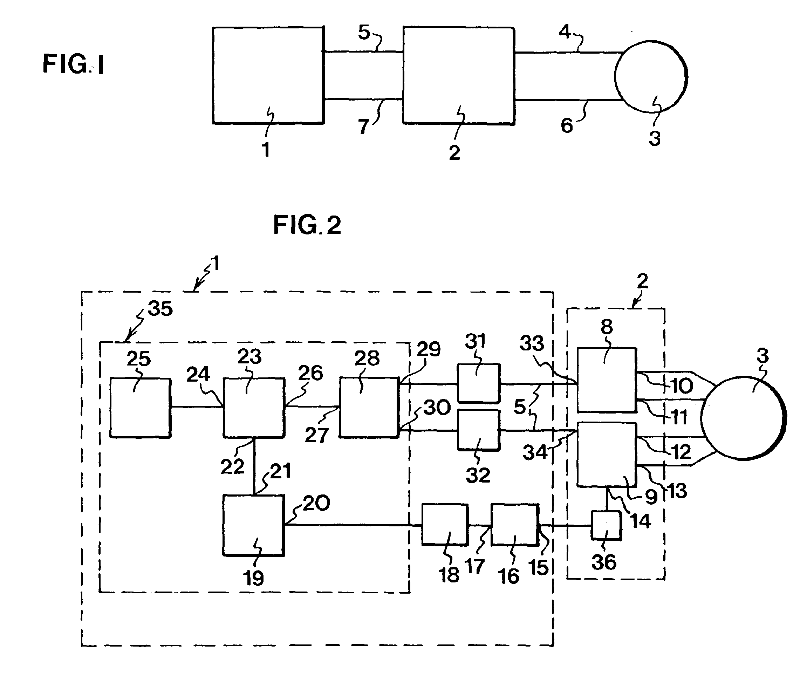

Thus, Fig. 1 is a highly schematic block diagram illustrating a preferred embodiment of an inventive device for controlling an electric motor. A control means 1 is connected to a drive means 2, which in turn is connected to an electric motor 3. This preferred embodiment of the inventive device is especially adapted to control a step motor 3 but may, by technical modifications encompassed by the inventive scope, also be adapted to control, among otherthings, synchronous motors. The drive means 2 generates driving voltages, one for each winding of the motor, and feeds these voltages to the motor 3 via a line 4. Basically, each driving voltage is a square wave having a given amplitude with two levels (plus a certain value and minus this value).

The switching of the driving voltages between the two levels is controlled by the control means 1 with the aid of control pulses through a control line 5. However, each driving voltage actually is not constant during each half period, but each half period consists of a block with a plurality of voltage pulses. The duration of the pulses, i.e. the pulse width, is controlled with aviewto achieving a largely constant current through the winding in the motor 3 to which the driving voltage is applied. This method of controlling the motor is generally referred to as pulse-width-modulated control. To be able to carry out this control, the drive means 2 detects the current in the windings of the motor 3. The main task of the control device 1 according to the invention is to sense when the rotation of the output shaft of the motor 3 is stopped or heavily braked, for instance when a valve driven by the motor 3 reaches an end position or when there is a malfunction in a device driven by the motor 3. In order to fulfil this task, the control means 1 receives, via a line 7 connected to the drive means 2, a signal corresponding to one of the driving voltages. The control means 1 is provided with means for detecting a considerable change in the appearance of this signal, this change having an immediate counterpart in the characteristics of the driving voltage and being seen as an indication that the output shaft of the motor has been heavily braked. The control means 1 then takes a given step, for instance breaking the driving voltages via the control line 5.

Fig. 2 is a more detailed block diagram illustrating the embodiment shown in Fig. 1. In Fig. 2, the control means 1 is indicated by a broken-line box. The drive means 2 consists of two step-motor circuits 8, 9 and a measurement resistor 36. The step-motor circuit 8 has an output 10 and an input 11, which are connected to a winding in the step motor 3. Likewise, the step-motor circuit 9 has an output 12 and an input 13, which are connected to another winding in the step motor 3. Furthermore, the step-motor circuit 9 has an output 14, which is connected to an input 15 of a low-pass filter 16. This low-pass filter 16 has an output 17, which is connected to an input 20 of a measured-value means 19 via an amplifier 18. The measured-value means 19 has an output 21, which is connected to an input 22 of a comparator means 23. This comparator means further has a combined input and output 24, which is connected to a memory 25. Moreover, the comparator means 23 has an output 26, which is connected to an input 27 of a decision unit 28. This decision unit has two control outputs 29, 30 which, via D-A converters 31 and 32, respectively, are connected to control inputs 33 and 34, respectively, of the step-motor circuits 8 and 9, respectively. In the preferred embodiment of the inventive device described here, the measured-value means 19, the comparator means 23, the memory 25 and the decision unit 28 form part of a microprocessor which, in Fig. 2, is indicated by a broken-line box and is designated by reference numeral 35. The functions of the measured-value means 19, the comparator means 23 and the decision unit 28 may largely be implemented in the form of a computer program. Also the filter, for instance, might consist of software in the processor 25.

The function of the control device will now be described in more detail, the waveforms in Fig. 3 being intended to illustrate this description.

At the outputs 29, 30 of the decision unit 28, the microprocessor 35 generates control signals which, by the D-A converters 31, 32, are converted to control pulses, whose width equals the spacing of the pulses. The control pulses are fed to the inputs 33 and 34 of the step-motor circuits 8 and 9, respectively. The control pulses control the levels or signs of the driving voltages. When the control signal is positive (high), i.e. during the control pulses, the corresponding step-motor circuit 8 or 9 generates a positive driving voltage, and when the control signal is zero (low), i.e. between the control pulses, the step-motor circuit generates a negative driving voltage. The control signals are alternately high and low in a given sequence, i.e. an operation schedule, causing the rotor of the step motor 3 to turn one step at a time. The basic appearance of the driving voltages is illustrated in diagram a in Fig. 3. Should these voltages be fed directly on to the windings of the motor 3, as is the case in socalled constant-voltage control, they would, in the windings of the motor, generate currents having the appearance shown in diagram b in Fig. 3. The drawbacks of constant-voltage control are indicated in the foregoing description of the prior art. According to the invention, use is instead made of pulse-width-modulated control. At their respective outputs 10, 12, the step-motor circuits 8, 9 generate driving voltages, the basic appearance of which is illustrated in diagram c in Fig. 3. The resulting currents are illustrated in diagram d in Fig. 3. The appearance of the driving voltage has been simplified in orderto better illustrate the principle of pulse-width modulation. In actual practice, the number of pulses in each half period of the control voltage is much higher. Since each driving voltage merely exists during a brief pulse whose duration is controlled by the amplitude of the current, use can be made of a much higher driving voltage than is the case in constant-voltage control. As a result, the current intensity can be raised rapidly and be maintained at a high and essentially constant level during each half period. Such pulse-width-modulated control primarily has the advantages of enabling the motor to be operated at a higher speed than is possible in constant-voltage control, as well as enabling the motor to yield a higher torque at a certain speed than is the case when use is made of constant-voltage control, at any rate in the upper speed range of the constant-voltage control. For exemplifying purposes, it may be mentioned that a step motor which can be operated with a driving-voltage frequency of 200 Hz in constant-voltage control, can be operated with a driving-voltage frequency of about 600 Hz in pulse-width-modulated control.

Assuming, for instance, that the motor 3 is used in an actuator for controlling a valve. In such an application, it is desirable to be able to detect that the valve has reached an end position, i.e. a position with a mechanical stop, without having to provide special switches for this purpose in the valve itself. There are a great many other applications where it likewise is desirable to detect a mechanical stop or heavy braking of the shaft. According to the invention, such detection can be brought about in the following manner. As described in the foregoing, the driving voltages include voltage pulses, whose width depends on the amplitude of the motor current. When the valve reaches an end position, the rotation of the output shaft of the motor 3 is stopped, and the motor loses step, i.e. it is unable to step in the forward direction. When the voltage over the winding is constant, this causes a current change, which may be an increase or a decrease, depending on the position of the rotor of the step motor 3 in relation to the poles of the motor in the winding. When use is made of pulse-width-modulated control, this control does, however, eliminate the current change by altering the width of the voltage pulses, resulting in an alteration of the average voltage over the winding, the spacing of the pulses being constant.

According to the invention, the end position is detected as a sudden change in appearance of the driving voltage. Since the duration of the pulses is very short (in the order of µs) and hardly can be measured in an expedient and cost-effective manner, the driving voltage has to be processed in some way, so as to facilitate the detection of the change. In accordance with the invention, this change is detected as follows.

The current generated in one of the windings of the motor 3, in this case the winding associated with the step-motor circuit 9, is by the step-motor circuit 9 diverted to ground above the measurement resistor 36. The voltage obtained over the measurement resistor 36, i.e. the measuring voltage, is schematically illustrated in diagram e in Fig. 3 and obtains, owing to the fact that the step-motor circuit 9 only lets through the current to the measurement resistor during the voltage pulses and not between them, a pulse shape where the widths of the pulses correspond to the pulse widths of the driving voltage. Thus, the measuring voltage may be regarded as an illustration of the driving voltage. The driving voltage is applied to the winding via an H-bridge (not shown), to which the measurement resistor 36 is connected in such a manner that the current through this resistor at all times has the same direction, regardless of the direction of the current through the winding. The measuring voltage is fed to the low-pass filter 16 in order to be low-pass filtered. The low-pass filtration produces a signal, whose amplitude varies according to the variations of the pulse widths. The filtered signal is schematically illustrated in diagram f in Fig. 3. The filtered signal is amplified by the amplifier 18 and then fed to the input 20 of the measured-value means 19 and the processor 35. For each block or half period, the measured-value means 19 generates a measured value by sampling the filtered signal at four measuring points. Since these four measuring points are very close to one another, the amplitude of the filtered signal has almost exactly the same value at all the measuring points. Preferably, the sample is taken where the amplitude is at its greatest, i.e. at FA in the diagram. It should basically be enough with one measuring point but, in order to enhance the reliability of the measurement, four points are sampled, and the resulting values are averaged. The measured-value means 19 feeds the thus-determined measured value to the input 22 of the comparator means 23. The comparator means 23 determines the difference between the measured value and a reference value, which it retrieves from the memory 25. In this embodiment, the reference value consists of the previous measured value, which is generated by measuring points which, as regards time, occupy the same place in the previous block as do the new measuring points in the present block. After the comparison, each measured value is thus stored in the memory 25. The comparator means 23 feeds the thus-determined difference value to the decision unit 28. The decision unit 28 then checks whether the difference value falls within a given range, for instance the range between the broken lines FB and FC in diagram f. If so, the decision unit 28 continues to output control signals in accordance with its operation schedule. If, on the other hand, the difference value falls outside the given range, as is the case in the last half period shown, the decision unit generates control signals causing the driving voltages to be 0 V. Thus, the device detects a change which is so rapid and so considerable that it can only originate from a stop or heavy braking of the rotation of the motor shaft.

It has been found that reasonable limits for the range consist of a change of 5-30% of the amplitude, depending on the application involved, preferably a change of approximately 20%. If this change is too small, steps will incorrectly be taken when there is a normal change in the load on the shaft.

It goes without saying that the invention encompasses other methods of detecting the sudden change in the characteristics of the driving voltage. For instance, a voltage which is an illustration of the driving voltage can be generated in some other fashion than over the measurement resistor, for instance by creating a copy of the driving voltage simultaneously with the driving voltage itself. The low-pass filtration may be replaced with band-pass filtration with a suitable bandwidth, or some other suitable form of signal processing. For instance, several measured values may be generated within each block. The measured value can be generated in many ways, for instance by measuring the surface area below a stretch of the voltage curve.

At each start-up of the motor, a start-up sequence is run through, in which the frequency of the control voltages is slowly raised from a fairly low initial level up to the aimed-at operational level. At the beginning of the start-up sequence, the comparator means 23 further stores the first-received amplitude value in the memory 25. The comparator means 23 then stores each new amplitude value in the memory 25 after the difference determination.

According to the invention, the motor control described above can be applied to an actuator, which is connected to a device with natural, mechanical stop positions. This device may, for instance, be a valve, in which case the end positions of the valve constitute the mechanical stop positions. The actuator has an output shaft, which is connected to the valve and is driven by a motor. The above detection of the end positions dispenses with the previous need of providing end-position indicators, such as microswitches, on the valve, as well as their lines to a control means. The present invention thus provides a complete control unit which merely need be connected to the motor and voltage feed of the actuator. In contradistinction to the prior art, there is no need of any further electrical and mechanical connections.

## Claims

1. A method for controlling a motor, comprising the steps of
feeding driving voltages to the windings of the motor (3), each driving voltage comprising a periodic basic voltage which is so modulated that each of its periods includes a plurality of voltage pulses,
measuring, during each voltage pulse, the amplitude of a current generated by the voltage pulse in the winding,
controlling the width of each voltage pulse as a function of the amplitude of the current, such that a given maximum permissible current amplitude is not exceeded, **characterised by** the steps of
detecting a change in the characteristics of the driving voltage,
determining the size of this change, and
taking a given step when this change exceeds a limit value.

2. A method as set forth in claim 1, **characterised in that** the step of detecting a change in the characteristics of the driving voltage comprises the substeps of
generating a measuring voltage corresponding to the driving voltage, and
signal-processing the measuring voltage and thus generating a signal-processed signal which is related to the pulse widths of the voltage pulses.

3. A method as set forth in claim 2, **characterised in that** the amplitude of the signal-processed signal is related to the pulse widths, and that the method further comprises the steps of
determining the amplitude of the signal-processed signal at least at one measuring point within each period, and comparing the obtained amplitude value with a reference value, and determining the difference between the amplitude value and the reference value, this difference constituting said change.

4. A method as set forth in claim 3, **characterised by** the step of storing the amplitude value after the comparison with the reference value in order to have the amplitude value constitute the reference value in a comparison of the next amplitude value with the reference value, the measuring points of the amplitude values compared occupying, as regards time, the same place in the respective periods.

5. A method as set forth in claim 3 or 4, **characterised in that** the step of determining the amplitude of the signal-processed signal at least at one measuring point comprises the substeps of
sampling the signal-processed signal at a plurality of points during a time period which is so short in relation to the duration of a signal period that the samples obtain essentially the same amplitude values, and
averaging the samples, the resulting average value constituting the amplitude value to be compared with the reference value.

6. A method as set forth in any one of claims 2-5, **characterised in that** the step of signal-processing the measuring voltage consists in low-pass filtering or band-pass filtering the measuring voltage.

7. A device for controlling a motor, comprising
a drive means (2) for generating driving voltages to be fed to the windings of the motor (3), each driving voltage comprising a periodic basic voltage which is so modulated that each of its periods includes a plurality of voltage pulses separated by a given time interval; for detecting the amplitude of a current generated in the motor by the voltage pulses; and for controlling the duration of each voltage pulse as a function of the detected amplitude, such that a given maximum permissible amplitude is not exceeded, and
a control means (1) connected to the drive means and adapted to control the shape and frequency of the basic voltage, **characterised in that** the control means comprises a detector means (16, 18, 19, 23, 25) which is connected to the drive means and is adapted to detect a change in the characteristics of the driving voltage and determine the size of this change, as well as a decision means (28) which is connected to the detector means and is adapted to decide on the taking of a given step when the change exceeds a limit value.

8. A device as set forth in claim 7, **characterised in that** the detector means is adapted to receive from the drive means a measuring signal corresponding to a driving voltage and comprises a signal-processing means (16) adapted to signal-process the measuring signal and generate a signal-processed signal related to the pulse widths of the voltage pulses.

9. A device as set forth in claim 8, **characterised in that** the amplitude of the signal-processed signal is related to the pulse widths, and that said change consists of a change in amplitude.

10. A device as set forth in claim 8 or 9, **characterised in that** the detector means further comprises a measured-value means (19) which is connected to the signal-processing means and is adapted to generate a measured value consisting of the amplitude of the signal-processed signal at least at one measuring point within a signal period, as well as a comparator means (23) which is connected to the measured-value means and is adapted to compare the generated measured value with a reference value and to generate a value of the change as the difference between the measured value and the reference value.

11. A device as set forth in claim 10, **characterised in that** the measured value consists of an average value of a plurality of samples of the amplitude of the signal-processed signal, and that the reference value consists of a previous measured value.

12. A device as set forth in any one of claims 8-11, **characterised in that** the signal-processing means (16) is a low-pass filter or a band-pass filter.

13. A device as set forth in any one of claims 8-11, **characterised in that** the drive means comprises a resistive measuring means (36) and is adapted to generate the measuring signal by feeding through the measuring means a winding current received from a winding and modulated in accordance with the driving voltage, the measuring signal consisting of the voltage over the measuring means.

14. An actuator comprising a step motor (3) for driving a device, for instance a valve, connected thereto and having mechanical stop positions, such as end posiions, said actuator further comprising a control means (1) connected to the motor and adapted to control it, the step motor being operated with pulse-width-modulated driving voltages, **characterised in that**
the control means comprises a detector means (16, 18, 19, 23, 25) for detecting a change in the characteristics of a driving voltage and determining the size of this change, as well as a decision means (28) connected to the detector means and adapted to decide on the taking of a given step when this change exceeds a limit value, which means that the motor loses step, e.g. owing to the fact that one of said mechanical stop positions has been attained.
